# EUROPEAN PATENT APPLICATION

(11) **EP 0 951 188 A1**
(43) Date of publication of application: **20.10.1999**
(21) Application number: 98106997.4
(22) Date of filing: 17.04.1998
(51) Int. Cl.: H04Q 7/32, H04L 1/00

(54) **A method for updating a channel coding scheme for digital communication systems**

(71) Applicant: ROBERT BOSCH GMBH, 70442 Stuttgart (DE)
(72) Inventor: Knudsen, Jasper, 9210 Aalborg SO (DK); Vejlgaard, Benny, 9220 Aalborg (DK)

(57) **Abstract**

The invention provides a method for updating a channel coding scheme for a digital communication system having one or more first stations (1) and a plurality of second stations (2) comprising the steps of: providing an updated channel coding scheme at at least one of the first stations (1); and downloading the updated channel coding scheme via a predetermined channel from said first station (1) to said second stations (2). A particular advantage of the present invention is that the update operation is faster und involves less costs and efforts.

## Description

### BACKGROUND OF THE INVENTION

The present invention relates to a method for updating a channel coding scheme for digital communication systems.

Although applicable to any digital communication system, the present invention and its underlying problems will be discussed with particular reference to GSM mobile systems.

In current GSM mobile communication systems, channel coding is required in order to achieve bit error rates suitable for speech and data services. In general, coding accomplishes its purpose through the deliberate introduction of redundancy into the transmitted messages. For a detailed introduction into information theory and coding see f.e. H. Taub, D. L. Schilling, Principles of Communication Systems, chapter 13, McGraw-Hill, 1987.

The channel coding schemes used in current 2^{nd} generation systems, such as GSM mobile systems, are convolutional coding and block codes, such as CRC (Cyclic Redundancy Check) and Reed-Solomon coding. However, the present invention is not restricted to these coding schemes and may be applied to others as well.

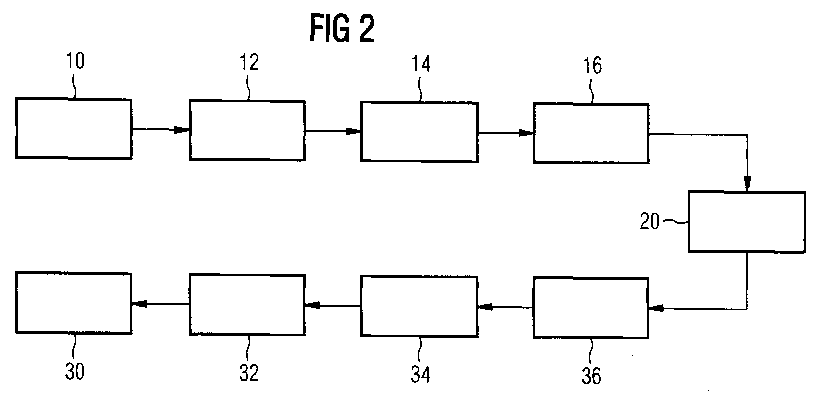

A schematic block diagram of channel coding and error detection/correction is illustrated in Fig. 2, wherein reference sign 10 denotes a transmitter for transmitting binary digits, 12 an encoder for performing the coding procedure, 14 an interleaver, 16 a modulator, 20 a radio channel, 30 a receiver for receiving the transmitted binary digits, 32 an decoder, 34 a deinterleaver, and 36 a demodulator. Thus, as it is generally known, before the digital data stream is modulated and applied to the radio channel, the data go through a process of error correction coding and interleaving. At the receiver 30 end, the data is demodulated, the process of interleaving is undone by the deinterleaver 34, and the data are decoded, i.e. the data bits are evaluated in a manner to take advantage of the error correcting and detecting features which result from the coding.

The coding scheme in Fig. 2 can be either a block code, or a convolutional code, or a combination of both coding schemes. If extra protection of the transmitted binary digits is needed, an outer code can be added to the system.

The performance, delay, and complexity of each of these coding schemes depend on its respective algorithm(s) having associated a set of parameters p₁, p₂, ..., pₙ, where n is a integral number.

These codings are predetermined in the specifications of the communication system in order for the mobile station and the base station to communicate even when the equipment are from different vendors. For instance, in the GSM mobile system the channel coding is fixed and specified in GSM 05.03, section 3.

A general problem arises when new or amended services or applications, such as new data channels or enhanced speech coders, are to be added to an existing mobile communication system having one or more coding schemes and corresponding parameter set(s). Usually, in this case the channel coding scheme has to be updated, f.e. certain or all parameters of the parameter set(s) have to be modified in order to fit the needs of that specific service or application.

This is because different services require different bit rates, bit error rates, delay constraints, and unequal error protection schemes. Thus, in principle all the equipment must be updated, when a new service is added to the network.

A possible solution to this problem is to locally perform this update at the manufacturer's site or at special service centers. However, this method involves the disadvantage that it can take quit a long time before all the manufacturers have changed their equipment or all the customers have visited their special service center.

Consequently, this would be a very costly and slow solution.

### SUMMARY OF THE INVENTION

The present invention provides a method as defined in independent claim 1. Preferred embodiments of the present invention are listed in the dependent claims.

The core idea of the present invention is to use a downloadable approach of the channel coding scheme, namly of the parameters and/or the algorithm(s). A particular advantage of the present invention is that the update operation is fast und inexpensive.

According to a preferred embodiment, said channel coding scheme includes a number of predetermined algorithms and an associated set of parameters, and the step of providing an updated channel coding scheme includes the step of providing a modified set of parameters. In this easy case, the network can offer a service specific channel coding scheme simply by downloading a new set of parameters.

According to a further preferred embodiment, the step of downloading the updated channel coding scheme includes the step of downloading at least the modified parameters of the modified set of parameters. Thus, it is not necessary to download all parameters of a modified set, but only the ones which have actually been modified.

According to a further preferred embodiment, said channel coding scheme includes a number of predetermined algorithms and an associated set of parameters, and the step of providing an updated channel coding scheme includes the step of providing a modified set of parameters and one or more modified algorithms. In this case, the whole coding scheme is altered.

According to a further preferred embodiment, the step of downloading the updated channel coding scheme includes the step of downloading at least the modified parameters of the modified set of parameters and the modified algorithms. In this case, the modified algorithms could be transmitted via a data channel, f.e. as a software update of the service program in the mobile, using the old coding scheme, and thereafter the modified set of parameters could be transmitted via the same or another channel.

According to a further preferred embodiment, the system comprises at least one channel having a fixed coding scheme which is not updated, and the step of downloading the updated channel coding scheme is performed via said channel. Suitably, this channel could be a control channel, because only the control channels in the mobile communication system need a predetermined fixed channel coding scheme. On these control channels, the parameters for the channel coding for the specific service or application can be downloaded to the terminal, and the channel coding can therefore be very flexible.

According to a further preferred embodiment, the method includes the step of providing a new service or a new application requiring said updating of said channel coding scheme.

According to a further preferred embodiment, the system uses convolutional codes and/or CRC codes and the step of downloading the updated channel coding scheme includes downloading one or more of the parameters block size, CRC polynomial, convolutional polynomial, constraint length, rate of convolutional coding, puncturing scheme, and repetition scheme.

According to a further preferred embodiment, the downloadable parameters are limited in a minimum and maximum range in order for an optimized implementation.

According to a further preferred embodiment, the system is a GSM or UMTS (Universal Mobile Telecommunication System) mobile system, the first stations being base stations, and the second stations being mobile stations. The effectivity of the present invention may be tested using simulations or the current implemtation of the 2^{nd} generation GSM mobile communication systems. However, the invention may also be applied to any new mobile communication systems not yet completed in their specifications. For instance, the UTMS system can be target of the invention.

### BRIEF DESCRIPTION OF THE DRAWINGS

The present invention will become more fully understood by the following detailed description of a preferred embodiment thereof in conjunction with the accompaying drawings, in which:
- Fig. 1: is a schematic illustration of a communication between a base and a mobile station via three channels for explaining a preferred embodiment of the method according to the present invention; and
- Fig. 2: illustrates a schematic block diagram of channel coding and error detection/correction.

### DESCRIPTION OF THE PREFERRED EMBODIMENTS

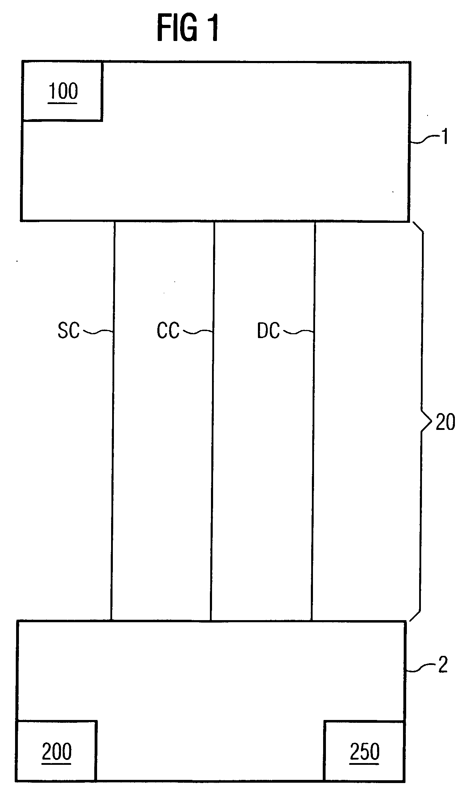

Fig. 1 is a schematic illustration of a communication between a base and a mobile station via three channels for explaining a preferred embodiment of the method according to the present invention.

In Fig. 1 reference sign 1 denotes a base station, 2 a mobile station, SC a speech channel, CC a control channel, DC a data channel as radio channel 20 (see also Fig. 2), 100 a base station input means; 200 a mobile station input means, and 250 a mobile station memory means.

This embodiment relates to updating the channel coding scheme of the speech channel SC of a digital GSM mobile system having a plurality of base stations and a plurality of mobile stations.

It is assumed that a new speech coder program has been implemented in the base station 1 by inputting it via the input means 100 which may be a software program interface or something similar, possibly also in form of a hardware means.

On the other hand, this new speech coder has also to be implemented in the mobile station 2. In this example, this is performed by transmitting the new speech coder program via the data channel DC from the base station 1 to the mobile station 2. Of course, this could also be arranged by inputting it via the input means 200, analogously to the input means 100.

Up to this point, all channels SC, CC, and DC use a different channel coding scheme each having a respective set of parameters and a respective algorithm.

As a consequence of the new speech coder program being implemented, the channel coding scheme of the speech channel SC has to be modified in order to fit the needs of that changed application.

To this end, a modified set of parameters corresponding to the speech channel SC coding scheme is supplied to the base station 1 through input means 100.

Then, downloading of the modified parameters of the modified set of parameters is effected using the control channel CC having a fixed coding scheme which is not updated. The new set of parameters is stored in the mobile station memory 250. It should be noted that in this case the algorithm of the speech channel SC coding scheme remains unaltered.

The parameters that need to be downloaded are specific for the speech channel SC coding scheme used in this exemplary GSM mobile communication system. If the system uses convolutional codes and/or CRC codes, the following parameters should be downloadable: block size, CRC polynomial, convolutional polynomial, constraint length, rate of convolutional coding, puncturing scheme, and repetition scheme.

Thereafter, the changed coding scheme may be used in the communication of the base station 1 and the mobile station 2. The same procedure is repeated for all remaining mobile stations, either from this base station 1 or from another which has available the changed parameter set.

Although the present invention has been described with respect to a preferred embodiment thereof, it should be understood that many modifications can be performed without departing from the scope of the invention as defined by the appended claims.

Particularly, the above embodiment is purely illustrative and any coding scheme may be used in the present invention. The kind of coding schemes used in a given system must be contained in the system specifications. Furthermore, the corresponding parameters can be limited in a minimum and maximum range in order for an optimized implementation.

Although the invention has been explained with respect to mobile communication systems, it can als be applied to stationary communication systems.

| LIST OF REFERENCE SIGNS: | |
|---|---|
| 1 | base station |
| 2 | mobile station |
| SC | speech channel |
| CC | control channel |
| DC | data channel |
| 100 | base station input means |
| 200 | mobile station input means |
| 250 | mobile station memory means |
| 10 | transmitter |
| 12 | encoder |
| 14 | interleaver |
| 16 | modulator |
| 20 | radio channel |
| 30 | receiver |
| 32 | decoder |
| 34 | deinterleaver |
| 36 | demodulator |

## Claims

1. A method for updating a channel coding scheme for a digital communication system having one or more first stations (1) and a plurality of second stations (2) comprising the steps of:
providing an updated channel coding scheme at at least one of the first stations (1); and
downloading the updated channel coding scheme via a predetermined channel from said first station (1) to said second stations (2).

2. The method according to claim 1, wherein said channel coding scheme includes a number of predetermined algorithms and an associated set of parameters, and the step of providing an updated channel coding scheme includes the step of providing a modified set of parameters.

3. The method according to claim 2, wherein the step of downloading the updated channel coding scheme includes the step of downloading at least the modified parameters of the modified set of parameters.

4. The method according to claim 1, wherein said channel coding scheme includes a number of predetermined algorithms and an associated set of parameters, and the step of providing an updated channel coding scheme includes the step of providing a modified set of parameters and one or more modified algorithms.

5. The method according to claim 4, wherein the step of downloading the updated channel coding scheme includes the step of downloading at least the modified parameters of the modified set of parameters and the modified algorithms.

6. The method according to one of the preceeding claims, wherein the system comprises at least one channel having a fixed coding scheme which is not updated, and the step of downloading the updated channel coding scheme is performed via said channel.

7. The method according to one of the preceeding claims, further comprising the step of providing a new service or a new application requiring said updating of said channel coding scheme.

8. The method according to one of the preceeding claims, wherein the system uses convolutional codes and/or CRC codes and the step of downloading the updated channel coding scheme includes downloading one or more of the parameters block size, CRC polynomial, convolutional polynomial, constraint length, rate of convolutional coding, puncturing scheme, and repetition scheme.

9. The method according to claim 8, wherein the downloadable parameters are limited in a minimum and maximum range.

10. The method according to one of the preceeding claims, wherein the system is a GSM or UMTS mobile system, the first stations being base stations, and the second stations being mobile stations.
